**Europäisches Patentamt**

(19)

**European Patent Office**

**Office européen des brevets**

(11) **EP 1 396 714 A1**

(12) **EUROPÄISCHE PATENTANMELDUNG**

(43) Veröffentlichungstag:
**10.03.2004  Patentblatt 2004/11**

(51) Int Cl.⁷: **G01N 15/14**, B01L 3/02

(21) Anmeldenummer: **03019968.1**

(22) Anmeldetag: **03.09.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **05.09.2002  DE 10241545**

(71) Anmelder:
• **GKSS-Forschungszentrum Geesthacht GmbH**
  **21502 Geesthacht (DE)**
• **GALAB Technologies GmbH**
  **21502 Geesthacht (DE)**

(72) Erfinder:
• **Schwenke, Heinrich**
  **21039 Escheburg (DE)**
• **Knoth, Joachim**
  **21481 Lauenburg (DE)**
• **Jantzen, Eckard, Dr.**
  **22303 Hamburg (DE)**

(74) Vertreter: **Niedmers, Ole**
**Patentanwälte**
**Niedmers Jaeger Köster Van der-Smissen-Strasse 3**
**22767 Hamburg (DE)**

(54) **Vorrichtung zur Überführung eines kontinuierlichen Flüssigkeitsstroms in einen Strom aus Flüssigkeitströpfchen**

(57)      Es wird eine Vorrichtung (10) zur Überführung eines wenigstens quasikontinuierlichen Flüssigkeitsstromes (11) in einen Strom aus Flüssigkeitströpfchen (12) vorgeschlagen. Dazu ist eine den Flüssigkeitsstrom (11) führende Kapillare (14) vorgesehen, die im Bereich (15) ihrer Austrittsdüse (16) mit einer Einrichtung (17) versehen ist, die in Abhängigkeit eines an dieser angelegten elektrischen Signals (18) einen Austritt eines Flüssigkeitstropfens (12) aus der Austrittsdüse (16) beschleunigt, wobei Laserlicht (13), nachdem es das zur analysierende Flüssigkeitströpfchen (12) beaufschlagt hat, mittels eines Detektors (19) erfaßt wird, wodurch ein zweites elektrisches Signal (20) erzeugt wird, und wobei aus erstem elektrischen Signal (18) und zweitem elektrischen Signal (20) eine Zeit $\Delta t$ ermittelt wird, die das Flüssigkeitströpfchen (12) vom Zeitpunkt des Austritts aus der Düse (16) bis zum Auftreffen des Laserlichts (13) auf das Flüssigkeitströpfchen (12) benötigt.

Fig. 2

EP 1 396 714 A1

**Beschreibung**

Die Erfindung betrifft eine Vorrichtung zur Überführung eines wenigstens quasikontinuierlichen Flüssigkeitsstromes in einen Strom aus Flüssigkeitströpfchen.

Eine zeitnahe und verlustfreie Umwandlung eines Flüssigkeitsstromes in einen Strom aus Flüssigkeitströpfchen stellt sich z.B. bei der Element- und Speziesanalyse kleinster Mengen, bspw. bei der Analyse einzelner Zellen oder Proteine durch sogen. "Hyphenated Techniken". Es handelt sich hierbei um analytische Verfahren, bei denen eine molekülspezifische Trenntechnik mit einer i.d.R. massenspektrometrischen Nachweistechnik in Echtzeit gekoppelt wird.

Bisher wird i.d.R. mit einem sogen. "Nebulizer" gearbeitet, d.h. einer Einrichtung, die einen Flüssigkeitsstrom in eine Folge von Nebelwolken auflöst, die aus einer großen Zahl kleinster Tröpfchen besteht.

Ein wesentlicher Nachteil der Nebulizer ist es, daß der Flüssigkeitsstrom in Kollektive von Tröpfchen portioniert wird, statt in einzelne, zeitlich und räumlich exakt definierte, individuelle Tropfen. Mit dieser bekannten Nebulizer-Technik sind im wesentlichen drei Nachteile verbunden. Zum einen ist die zu analysierende Menge viel größer mit den daraus folgenden Nachteilen bezüglich benötigter Probenmenge, Trennschärfe der Verbundtechnik (Hyphenated technique) und der Nachweisstärke des Verbundverfahrens. Zum anderen ist die räumliche Ausdehnung der Nebelwolke im Vergleich zum einzelnen Tropfen sehr groß, so daß große Verluste bei der Übergabe der Probe in ein Massenspektrometer unvermeidlich sind. Schließlich ist der Zeitpunkt des Einritts einer Tröpfchenwolke in ein Massenspektrometer nicht präzise bestimmbar.

Trotz wachsender Verbreitung von Analysetechniken, die sich einer Tröpfchenmethode bedienen, ist derzeit kein Tröpfchengenerator bekannt, der die voraufgeführten Nachteile auf befriedigende Weise ausschließt. Es ist mit den bisher bekannten Analysetechniken nicht möglich, einen sehr kleinen, aufgeprägten Flüssigkeitsstrom über einen ausreichend langen Zeitraum hinweg quantitativ und verlustfrei und ohne Einsatz eines Puffervolumens in eine Folge von Tröpfchen zu zerlegen. Bekannte Tröpfchengeneratoren sind extrem empfindlich gegen Druckschwankungen. So ist es z.B. bisher nicht gelungen, sogen. HPLC-Trennverfahren (high pressure liquid chromatography) bzw. CE-Einrichtungen (Kapillar Elektrophorese) ohne Leistungseinbußen mit einem Tröpfchengenerator zu koppeln, da schon minimale Änderungen des Durchflusses die stetige Erzeugung von Tröpfchen ohne Tot- und Puffervolumina nicht zulassen.

Es ist somit Aufgabe der vorliegenden Erfindung, eine Vorrichtung der eingangs genannten Art zu schaffen, mit der es möglich ist, einen wenigstens quasikontinuierlichen Flüssigkeitsstrom in einen Strom aus Flüssigkeitströpfchen derart präzise zu überführen, daß eine vorbestimmbare Menge von Flüssigkeitströpfchen pro Zeit kontinuierlich erzeugt werden kann und/oder Flüssigkeitströpfchen in vorbestimmbarer Frequenz erzeugt werden können, so daß eine angestrebte Kopplung von tröpfchenerzeugenden Kapillartechniken mit Massenspektrometern durchgeführt werden kann, d.h. ein sehr kleiner, ausgeprägter Flüssigkeitsstrom über einen vorbestimmbaren, ausreichend langen Zeitraum hinweg quantitativ und verlustfrei in eine Folge von Tröpfchen zerlegbar ist.

Gelöst wird die Aufgabe gem. der Erfindung dadurch, daß eine den Flüssigkeitsstrom führende Kapillare vorgesehen ist, die im Bereich ihrer Austrittsdüse mit einer Einrichtung versehen ist, die in Abhängigkeit eines an diese angelegten ersten elektrischen Signals einen Austritt eines Flüssigkeitsstromes aus der Austrittsdüse beschleunigt, wobei das Laserlicht, nachdem es das zu analysierende Flüssigkeitströpfchen beaufschlagt hat, mittels eines Detektors erfaßt wird, wodurch ein zweites elektrisches Signal erzeugt wird, und wobei aus erstem elektrischen Signal und aus zweitem elektrischen Signal eine Zeit $\Delta t$ ermittelt wird, die das Flüssigkeitströpfchen vom Zeitpunkt des Austritts aus der Düse bis zum Auftreffen des Laserlichts auf das Flüssigkeitströpfchen bzw. bis zum Passieren einer Lichtschranke benötigt.

Der Vorteil der erfindungsgemäßen Lösung besteht darin, daß diese die voraufgeführten Nachteile, die die bisher für derartige Aufgaben herangezogenen Techniken zeigen, nicht aufweist. Erfindungsgemäß ist eine totvolumenfreie Transformation eines kapillargeführten Flüssigkeitsstromes in eine Sequenz gleichartiger Tröpfchen möglich. Erfindungsgemäß ist, wie angestrebt, eine zeitstabile und verlustfreie Umwandlung eines quasikontinuierlichen Flüssigkeitsstromes in einen Strom aus Flüssigkeitströpfchen vorbestimmbarer Menge bzw. vorbestimmbarer Frequenz möglich.

Vorzugsweise wird die Vorrichtung derart gestaltet, daß dann, wenn die Zeit $\Delta t >$ einer vorgegebenen Zeit $t_N$ ist, der Abstand wenigstens zweier aufeinanderfolgender elektrischer Signale vermindert wird, bis $\Delta t = t_N$.

$t_N$ bestimmt sich nach $t_N = \frac{V_T}{T_\gamma}$, wobei $V_T$ das Volumen der Tröpfchen und $T_\gamma$ des Tröpfchenstroms ist, d.h. das Volumen an Flüssigkeit, das pro Zeiteinheit durch die Tropfen transportiert wird.

Mittels geeigneter elektrischer bzw. elektronischer Einrichtungen, kann so ein selbstregelndes System geschaffen werden, d.h. die Zeit, die vom Austritt des Tröpfchens aus der Düse bis zum Eintreffen am Ort der Beaufschlagung mit Laserlicht vergeht, wird selbständig auf eine vorgegebene Normzeit $t_N$ geregelt, was gleichermaßen auch für die Anzahl der Tröpfchen pro Zeit (Tröpfchenfrequenz) möglich ist.

Auf die gleiche Weise kann die Vorrichtung vorzugsweise derart betrieben werden, daß dann, wenn die Zeit $\Delta t <$ einer vorgegebenen Zeit $t_N$ ist, der Abstand wenigstens zweier aufeinanderfolgender elektrischer Signale vergrößert wird, bis $\Delta t = t_N$.

Die Beschleunigungseinrichtung selbst, die an sich derart ausgebildet sein muß, daß sie den Austritt eines Flüssigkeitströpfchens aus der Düse der Kapillare beschleunigt, kann an sich beliebig geeignet ausgebildet sein. Vorzugsweise ist diese Beschleunigungseinrichtung jedoch in Form eines Piezoelements ausgebildet, mit dem auf einfache aber hochpräzise Weise eine elektrisch steuerbare Beschleunigungseinrichtung im Bereich der Austrittsdüse der Flüssigkeitskapillare vorgesehen werden kann.

Die Erfindung wird nun unter Bezugnahme auf die nachfolgenden schematischen Zeichnungen anhand eines Ausführungsbeispieles im einzelnen beschrieben. Darin zeigen:

Fig. 1     die drei Grundkomponenten einer ersten Ausführungsform der Vorrichtung,

Fig. 2     die drei Grundkomponenten einer weiteren Ausführungsform der Vorrichtung,

Fig. 3     eine Kombination aus Blockschaltbild und Flußdiagramm der Erfassungs- und Regelungsstrecke einer ersten Ausführungsform der Vorrichtung,

Fig. 4     eine Kombination aus Blockschaltbild und Flußdiagramm der Erfassungs- und Regelungsstrecke einer zweiten Ausführungsform der Vorrichtung,

Fig. 5     ein Tröpfchenerzeugungsschema gem. im Stand der Technik bekannten Tröpfchenerzeugungseinrichtungen und die bei diesen auftretenden, bildlich dargestellten Nachteilen für den Fall, daß der Kapillarstrom größer ist als der Tröpfchenstrom und

Fig. 6     eine Darstellung eines Flüssigkeitströpfchenerzeugungsschemas wie Fig. 5 für den Fall, daß der Kapillarstrom kleiner ist als der Tröpfchenstrom sein könnte.

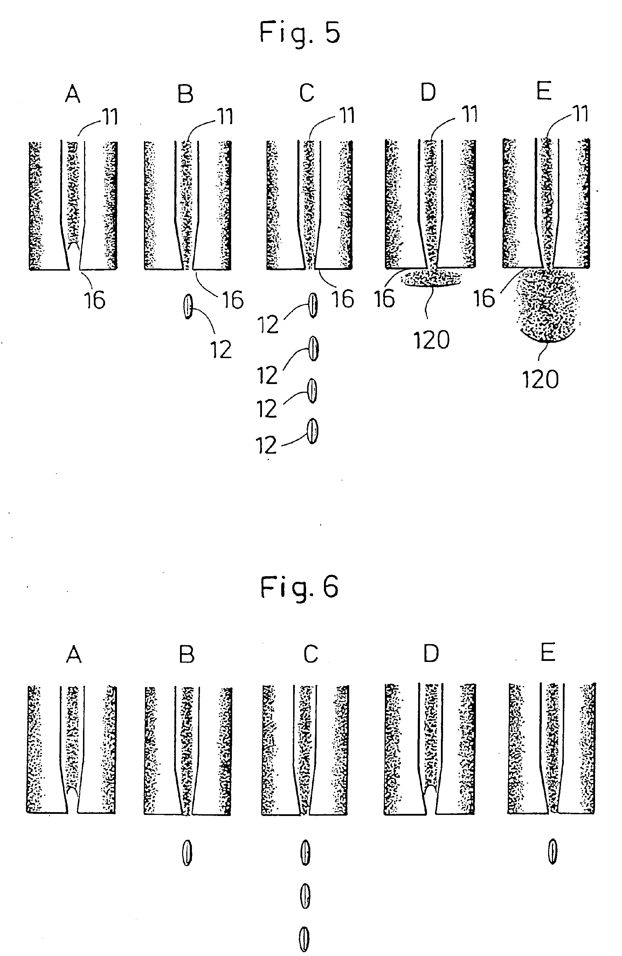

Zunächst wird Bezug genommen auf die Darstellung gem. Fig. 5, das die Überführung eines kontinuierlichen Flüssigkeitsstromes 11 in einen Strom aus Flüssigkeitströpfchen 12 zeigt, wie sie mittels bisher bekannter Techniken ausgeführt wurde, die aber den Einsatz der Tröpfchenmethode im Verbundverfahren (hyphenated technique) ausschließt.

Das bisherige Verfahren, vgl. Fig. 5, läuft wie folgt ab: Zum Zeitpunkt A startet das System mit leerer Austrittsdüse 16. Der nachrückende Flüssigkeitsstrom 11 führt zum Zeitpunkt B zur Ausschleuderung eines ersten Flüssigkeitstropfens 12. Über eine mehr oder weniger kurze Zeitspanne C läuft das System noch korrekt, jedoch sind unter der gegebenen Voraussetzung $T_c >$

$T_\gamma$ mit $T_c$ = Kapillarstrom und $T_\gamma$ = Tröpfchenstrom) die in D und E dargestellten Zustände unvermeidbar, die das System kollabieren lassen und zwar derart gründlich, daß ein Wiederanlaufen der Tröpfchenerzeugung ohne mechanische Entfernung des Riesentropfens 120, Zustände D und E, und weiterer Maßnahmen nicht möglich ist.

Der in Fig. 6 skizzierte Ablauf eines ähnlichen Prozesses ist zwar weniger instabil, jedoch aus Gründen der Effektivität ebenfalls unerwünscht und der durch einen nachlassenden Kapillarstrom ($T_c < T_\gamma$) gekennzeichnend ist. Nach Ablauf der Erzeugung von Flüssigkeitströpfchen 12 (Schritte A bis C) kommt es im Schritt D zu einem Stillstand des Stroms von Flüssigkeitströpfchen 12, der jedoch unter den gegebenen Bedingungen ($T_c < T_\gamma$) wieder anläuft, Schritt E, wenn der Flüssigkeitsstrom 11 wieder vorrückt.

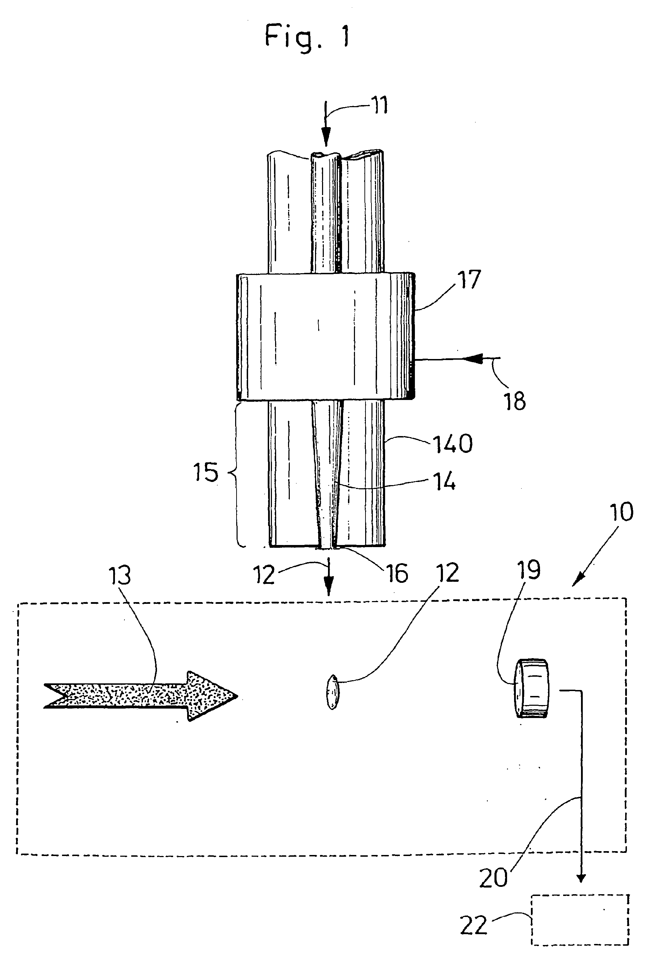

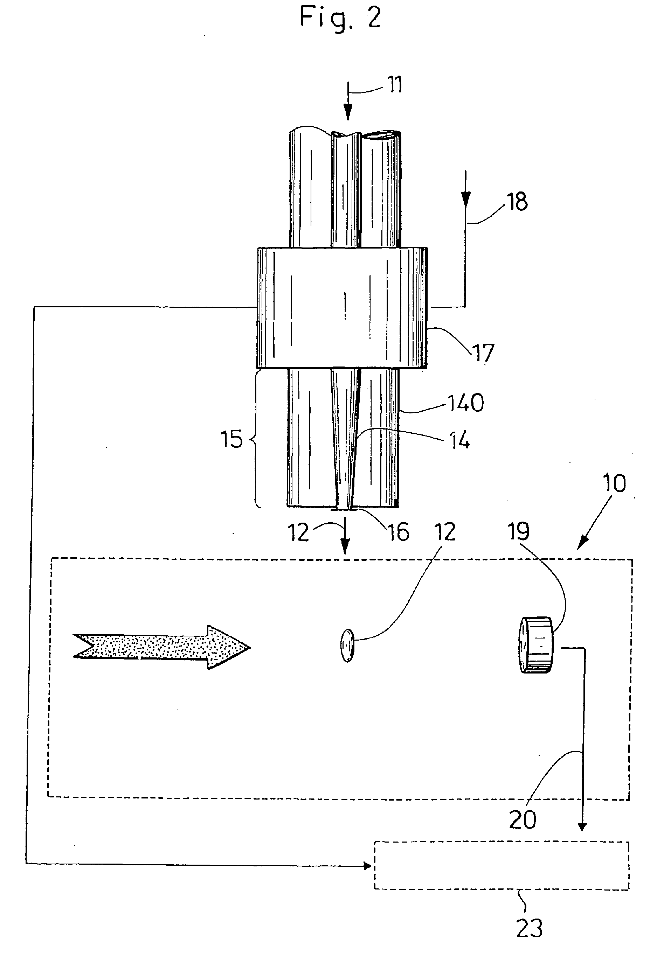

Es wird nun Bezug genommen auf die Figuren 1 und 2, die in stark schematisierter Form den Aufbau der Vorrichtung 10 gem. der Erfindung zeigen. Da mittels im Stand der Technik bekannter Einrichtungen kapillare Flüssigkeitsströme 11 erzeugt werden können, wird auf diese Einrichtungen hier nicht weiter eingegangen. Ein kapillarer Flüssigkeitsstrom 11 wird in einer Kapillare 14 eines kapillaren Führungrohres 140 geführt, die eine Austrittsdüse 16 aufweist, wobei Flüssigkeitströpfchen 12 aufgrund der Zufuhr eines Flüssigkeitsstromes 11 aus der Austrittsdüse 16 austreten. Im Bereich der Austrittsdüse 16 ist eine Beschleunigungseinrichtung 17 vorgesehen, die hier als Piezoelement ausgebildet ist, das ringförmig ist und über das kapillare Führungsrohr 140 geschoben wird.

Das aus der Austrittsdüse 16 austretende Flüssigkeitströpfchen 12 legt einen Weg bis zu dem Ort der Vorrichtung 10 zurück, die dazu dient, das Tröpfchen z.B. mittels Laserlicht zu detektieren und den Zeitpunkt festzulegen, an dem das Tröpfchen eine vorgegebene Position passiert.

Ein Detektor 19 erkennt, ob das Flüssigkeitströpfchen 12, beispielsweise die Laserlichtachse zum Detektor 19 kreuzt. Erkennt der Detektor 19, daß ein Flüssigkeitströpfchen 12 die Strahlenachse des Laserlichts 13 zum Detektor 19 durchquert, wird ein zweites elektrisches Signal 20 erzeugt und auf ein Zählwerk 22 gegeben. Anstelle des Zählwerkes 22, wie in Fig. 1 vorgesehen, kann alternativ auch eine Zeitmeßeinrichtung 23, vgl. Fig. 2, vorgesehen sein.

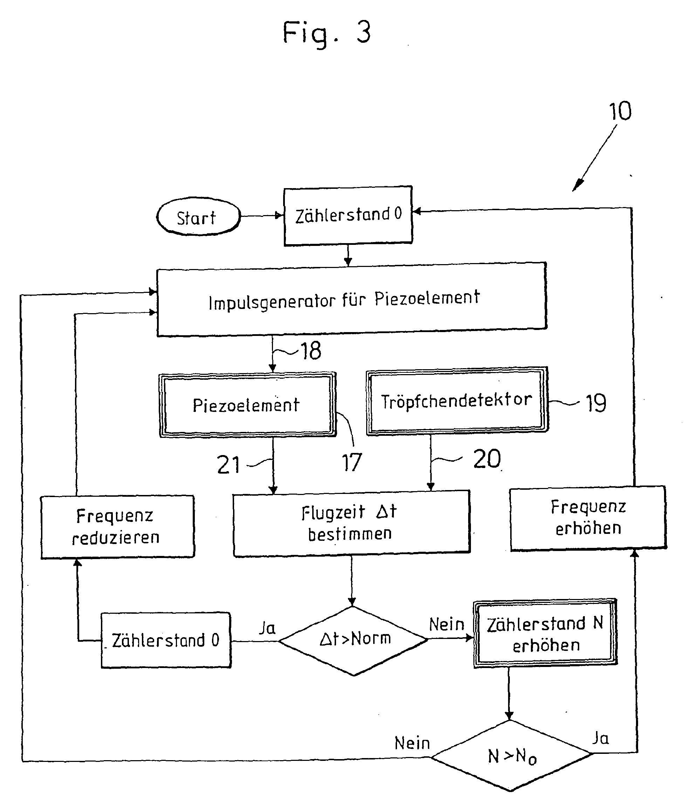

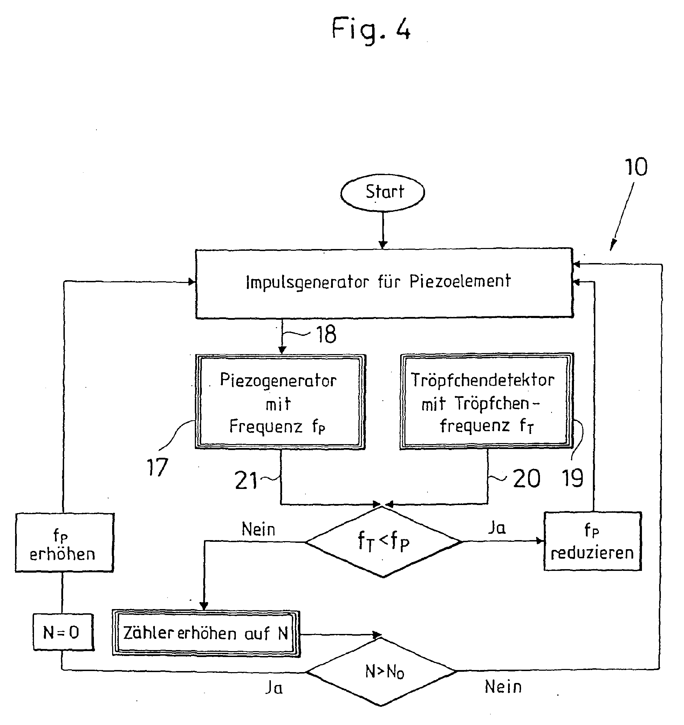

Die als Piezoelement ausgebildete Beschleunigungseinrichtung 17 erhält von einem Impuls- bzw. Taktgenerator, vgl. die Figuren 3 und 4, einen Taktimpuls in Form eines ersten elektrischen Signals 18 bzw. einer Folge erster elektrischer Signale 18.

Die in den Figuren 3 und 4 dargestellten Blockschaltbilder, die den regelungstechnischen Teil der Vorrichtung 10 darstellen, sind aus elektronischen Schalt-, Regelungs-, Detektions- und Vergleicherbausteinen aufgebaut, die in der elektronischen Schaltungstechnik allgemein bekannt sind und auf die hier im einzelnen nicht weiter eingegangen zu werden braucht.

Die beiden zentralen Regelgrößen für die erfindungsgemäße Vorrichtung 10 sind die Flugzeit des Flüssigkeitströpfchens 12, gemessen durch die Zeitdifferenz $\Delta t$ zwischen dem ersten elektrischen Signal 18, das die Beschleunigungseinrichtung 17 beaufschlagt, und dem zweiten elektrischen Signal 20, das vom Detektor 19 erzeugt wird, vgl. Fig. 3, bzw. alternativ der Tröpfchenfrequenz i.V.m. der Zahl n der Flüssigkeitströpfchen 12, die seit dem Start bzw. der Rücksetzung des Zählers 22 den Tröpfchendetektor mit minimalem $\Delta t$ bzw. alternativ bis maximaler Tröpfchenfrequenz $f_\gamma$ passiert haben.

Mittels der Vorrichtung 10 wird der in der Fig. 5 dargestellte Prozeß vermieden, der unvermeidbar dann eintritt, wenn der Flüssigkeitsstrom $T_c$ über eine ausreichend lange Zeit größer wird als der Strom der Flüssigkeitströpfchen $T_\gamma$ der das Produkt aus dem Volumen des Einzeltropfens $V_T$ bzw. 12 und der Zahl der Tröpfchen pro Zeiteinheit $f_\gamma$ ($T_\gamma = V_T \times f_\gamma$) ist.

Erfindungsgemäß wird die Tröpfchenerzeugung durch Regelung der Piezofrequenz $f_p$ gem. den in den Figuren 3 und 4 angegebenen Schemata so gesteuert, daß der kapillare Flüssigkeitsstrom 11 tendenziell kleiner als der (virtuelle) Strom der Flüssigkeitströpfchen 12 ist, jedoch dem Zustand $T_c = T_\gamma$ über möglichst lange Zeit nahekommt.

Da durch die erfindungsgemäße Anordnung die Fluggeschwindigkeit der Flüssigkeitströpfchen 12 als Regelungssignal verwendet wird, bietet sich als zusätzlicher Vorteil die Möglichkeit an, die Höhe des ersten elektrischen Signals 18, der bspw. als Spannungsimpuls vorliegt, der das Piezoelement 17 anregt, nach Maßgabe der Flugzeit $\Delta t$ zu regeln, mit dem Ziel, die Fluggeschwindigkeit des Flüssigkeitströpfchens 12 bzw. den Abstand des ersten Flüssigkeitströpfchens 12 in der Kette von Flüssigkeitströpfchen 12 von der Austrittsdüse 16 aus geeignet zu verändern.

Eine weitere effektive Methode zur Anpassung der Piezofrequenz an den kapillaren Flüssigkeitsstrom 11 besteht darin, die Änderung der Geschwindigkeit der Flüssigkeitströpfchen 12, die bspw. mit Hilfe einer Lichtschranke gem. Fig. 1 über die Zeit $\Delta t$ gemessen wird, als Eingangsgröße für die Regelung zu verwenden, und zwar derart, daß die Geschwindigkeit der Flüssigkeitströpfchen 12 auf einem maximalen Niveau gehalten wird.

Bezugszeichenliste

10     Vorrichtung
11     Flüssigkeitsstrom
12     Flüssigkeitströpfchen
120    Riesentropfen
13     Laserlicht
14     Kapillare
140    kapillares Führungsrohr
15     Bereich
16     Austrittsdüse
17     Beschleunigungseinrichtung (Piezoelement)
18     erstes elektrisches Signal
19     Detektor
20     zweites elektrisches Signal
21     elektrisches Signal
22     Impulszähler
23     Zeitmeßeinrichtung

**Patentansprüche**

1. Vorrichtung zur Überführung eines wenigstens quasikontinuierlichen Flüssigkeitsstromes in einen Strom aus Flüssigkeitströpfchen, **dadurch gekennzeichnet, daß** eine den Flüssigkeitsstrom (11) führende Kapillare (14) vorgesehen ist, die im Bereich (15) ihre Austrittsdüse (16) mit einer Einrichtung (17) versehen ist, die in Abhängigkeit eines auf diese angelegten ersten elektrischen Signals (18) einen Austritt eines Flüssigkeitstropfens (12) aus der Austrittsdüse (16) beschleunigt, wobei Laserlicht (13), nachdem es das zu analysierende Flüssigkeitströpfchen (12) beaufschlagt hat, mittels eines Detektors (19) erfaßt wird, wodurch ein zweites elektrisches Signal (20) erzeugt wird, und wobei aus dem ersten elektrischen Signal (18) und dem zweiten elektrischen Signal (20) eine Zeit $\Delta t$ ermittelt wird, die das Flüssigkeitströpfchen (12) vom Zeitpunkt des Austritts aus der Düse (15) bis zum Auftreffen des Laserlichts (13) auf das Flüssigkeitströpfchen (12) benötigt.

2. Vorrichtung nach Anspruch 1, **dadurch gekennzeichnet, daß** die Beschleunigungseinrichtung (17) ein Piezoelement ist.

3. Vorrichtung nach Anspruch 2, **dadurch gekennzeichnet, daß** die Piezofrequenz $f_p$ ständig mit der Tröpfchenfrequenz $f_\gamma$ verglichen wird und daß $f_p$ derart geregelt wird, daß $f_p = f_\gamma + \varepsilon$ , wobei $\varepsilon$ eine beliebig kleine Zahl ist.

4. Vorrichtung nach Anspruch 2, **dadurch gekennzeichnet, daß** die Piezofrequenz $f_p$ derart geregelt wird, daß die Tröpfchenfrequenz ein Maximum wird.

5. Vorrichtung nach Anspruch 1, **dadurch gekennzeichnet, daß** dann, wenn die Zeit $\Delta t >$ einer vorgegebenen Zeit $t_N$. ist, der Abstand wenigstens zweier aufeinanderfolgender erster elektrischer Signale (18) vermindert wird, bis $\Delta t = t_N - \varepsilon$ , wobei $\varepsilon$ ein beliebig kleiner Zeitraum ist.

6. Vorrichtung nach Anspruch 1, **dadurch gekenn-**

**zeichnet, daß** dann, wenn die Zeit $\Delta t <$ einer vorgegebenen Zeit $t_N$ ist, der Abstand wenigstens zweier aufeinander folgender erster elektrischer Signale (18) vergrößert wird, bis $\Delta t = t_N - \varepsilon$, wobei $\varepsilon$ ein beliebig kleiner Zeitraum ist.

# Fig. 1

# Fig. 2

# Fig. 3

10

```
Start ──► Zählerstand 0 ◄──────────────────────────┐
              │                                      │
              ▼                                      │
    ┌─────────────────────────────────────┐         │
──► │   Impulsgenerator für Piezoelement   │         │
│   └─────────────────────────────────────┘         │
│              │ ~18                                 │
│              ▼                                     │
│   ┌──────────────┐      ┌──────────────────┐      │
│   │ Piezoelement │      │ Tröpfchendetektor│ ~19  │
│   └──────────────┘      └──────────────────┘      │
│       21~    17~            ~20                    │
│              │                │                    │
│   ┌──────────┐ ▼              ▼          ┌──────────┐
│   │ Frequenz │  ┌──────────────────┐     │ Frequenz │
│   │reduzieren│  │  Flugzeit Δt     │     │ erhöhen  │
│   └──────────┘  │  bestimmen       │     └──────────┘
│        ▲        └──────────────────┘          ▲
│        │              │                        │
│  ┌──────────────┐  Ja  ◇               Nein  ┌──────────────┐
│  │ Zählerstand 0│◄────◇ Δt>Norm ◇──────────► │ Zählerstand N│
│  └──────────────┘      ◇                      │ erhöhen      │
│                                               └──────────────┘
│                                                     │
│                          Nein   ◇           Ja      ▼
└────────────────────────────────◇ N>N_o ◇───────────┘
```

# Fig. 4

```
                        ┌─────────┐
                        │  Start  │                              10
                        └────┬────┘                            ╱
                             │                               ╱
      ┌──────────────────────▼──────────────────────────────────┐
      │         Impulsgenerator für Piezoelement                 │◄──
      └───────────────────────┬─────────────────────────────────┘
                              │~18
          ┌───────────────────┴─────────┐
          ▼                             ▼
  ┌───────────────┐           ┌───────────────────┐
  │ Piezogenerator│           │ Tröpfchendetektor │
  │     mit       │           │  mit Tröpfchen-   │
  │ Frequenz f_P  │           │   frequenz f_T    │
  └───────────────┘           └───────────────────┘
   17        21~                      ~20    19
```

$f_T < f_P$

Nein    Ja

$f_P$ erhöhen

$f_P$ reduzieren

N = 0     Zähler erhöhen auf N

$N > N_0$

Ja     Nein

# Fig. 5

A    B    C    D    E

# Fig. 6

A    B    C    D    E

**Europäisches Patentamt**

## EUROPÄISCHER RECHERCHENBERICHT

Nummer der Anmeldung

EP 03 01 9968

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 318 482 A (BARRY DONALD E ET AL) 9. März 1982 (1982-03-09) | 1,2 | G01N15/14 B01L3/02 |
| Y | * das ganze Dokument * | 3-6 | |
| | --- | | |
| X | WO 96 12172 A (UNIV WASHINGTON ;DEN ENGH GER VAN (US)) 25. April 1996 (1996-04-25) | 1,2 | |
| Y | * Seite 10, Zeile 24 - Seite 11, Zeile 8 * | 3-6 | |
| | --- | | |
| A | ANONYMOUS: "Feedback for Synchronized Pressure Jet Using Optical Sensor. May 1974." IBM TECHNICAL DISCLOSURE BULLETIN, Bd. 16, Nr. 12, 1. Mai 1974 (1974-05-01), Seiten 3877-3878, XP002261141 New York, US * Zusammenfassung * | 1-6 | |
| | ----- | | |

**RECHERCHIERTE SACHGEBIETE (Int.Cl.7)**

G01N
B01L
G01P

*Der vorliegende Recherchenbericht wurde für alle Patentansprüche erstellt*

| Recherchenort | Abschlußdatum der Recherche | Prüfer |
|---|---|---|
| MÜNCHEN | 12. November 2003 | Müller, T |

EPO FORM 1503 03.82 (P04C03)

EP 1 396 714 A1

# ANHANG ZUM EUROPÄISCHEN RECHERCHENBERICHT
## ÜBER DIE EUROPÄISCHE PATENTANMELDUNG NR.

EP 03 01 9968

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2003

| Im Recherchenbericht angeführtes Patentdokument | Datum der Veröffentlichung | Mitglied(er) der Patentfamilie | Datum der Veröffentlichung |
|---|---|---|---|
| US 4318482 A | 09-03-1982 | KEINE | |
| WO 9612172 A | 25-04-1996 | US 5602039 A | 11-02-1997 |
| | | AU 691693 B2 | 21-05-1998 |
| | | AU 3962695 A | 06-05-1996 |
| | | CA 2201332 A1 | 25-04-1996 |
| | | DE 69530851 D1 | 26-06-2003 |
| | | EP 0786079 A1 | 30-07-1997 |
| | | JP 10507525 T | 21-07-1998 |
| | | WO 9612172 A1 | 25-04-1996 |

EPO FORM P0461

Für nähere Einzelheiten zu diesem Anhang : siehe Amtsblatt des Europäischen Patentamts, Nr.12/82